# EUROPEAN PATENT APPLICATION

(11) **EP 3 261 032 A1**
(43) Date of publication of application: **27.12.2017**
(21) Application number: 17176869.0
(22) Date of filing: 20.06.2017
(51) Int. Cl.: G06Q 10/06, G06Q 10/04

(54) **PRESENCE MONITORING METHOD AND SYSTEM**

(30) Priority: 20.06.2016 FI 20165510
(71) Applicant: Pancomp International Oy, 90590 Oulu (FI); Päkkilä, Pekka, 90230 Oulu (FI)
(72) Inventor: Päkkilä, Pekka, 90230 Oulu (FI)
(74) Representative: Heinonen & Co

(57) **Abstract**

The present invention pertains to methods and systems for setting up presence monitoring systems and the use of presence monitoring systems. The system receives checkpoint identifier fata and/or location data from a reading device. The system checks information data and/or location data whether it matches with check-points formerly created in the computer system, and when the data matches, confirming the presence of a person at the checkpoint. When the data does not match with the checkpoints formerly created in the system, creating a checkpoint in the system based on the received information and/or location data such that the checkpoint will be recognized by the system based on checkpoint identifier information data and/or location data received from a reading device.

## Description

### FIELD OF THE INVENTION

Generally the present invention relates to presence monitoring methods and systems. In particular, however not exclusively, the present invention pertains to methods and systems for setting up presence monitoring systems and the use of presence monitoring systems. "presence monitoring" is also used in this application to mean time attendance and workflow management.

### BACKGROUND

Presence monitoring systems are used today for e.g. monitoring various sites. Office buildings, warehouses and other similar locations need 24/7 surveillance. One way is to have a person patrol a route such that the person has to enter the building or other destination that is under surveillance and check his/her presence at the location. Various presence monitoring systems are utilized for making such an on-location checking. In a similar fashion, presence monitoring systems are utilized for example in the cleaning service for the cleaning staff to report when a location is cleaned and maintained. Presence monitoring systems can also be used for time attendance and work flow management.

Typically, a presence monitoring system comprises multiple checkpoint identifiers placed on different sites such that they combine for a route. The checkpoint identifiers are typically RFID or NFC tags, which have a readable identifier code such as a hex code. The person then travels the destined route and stamps himself/herself with a mobile terminal at these checkpoint identifiers for indicating that he/she has physically been at the destination. The mobile terminal transfers the stamp information (e.g. the identifier code, GPS location and time) to a server of the presence monitoring system, The data can be transferred via a mobile cellular communications network, for example.

Today, however there are multiple service providers with different system variations already in place on different locations. Thousands of checkpoint identifiers are placed around cities worldwide. Placing new checkpoint identifiers on various sites is a costly process as it requires manpower to get the identifiers physically on site.

To change service provider is also costly and cumbersome. The process to make such a change is in many instances waste of resources as well. The new service provider must install their checkpoint identifiers by manually placing a new set of identifiers potentially much in the same locations as the first service provider. As a presence monitoring system may comprise hundreds or thousands of checkpoint identifiers, it is a lot of manual time consuming work.

It is useful to use location data, such as GPS location data, to confirm that the identifier is actually stamped in the correct location. However, GPS signals can usually not be received inside buildings. Even in open air, it is often not possible to get very accurate location information with a GPS receiver.

### SUMMARY OF THE INVENTION

The objective is to avoid or at least alleviate the problems described hereinabove not satisfactorily solved by the known arrangements, and to provide a feasible method and system for setting up a presence monitoring system and/or monitoring presence of a person. The objective may include providing a presence monitoring system without a necessity to install new identifier tags to every checkpoint. The objective may also include accuracy improvement of the checkpoint location information.

The aforesaid objective is achieved by the embodiments of a method and system in accordance with the present invention.

Accordingly, in one aspect of the present invention a method for setting up a presence monitoring system and/or for monitoring presence of a person, comprising the steps of
- determining checkpoints,
- determining device-readable checkpoint identifiers at the determined checkpoints,
- reading a checkpoint identifier with a reading device,
- transmitting checkpoint identifier related information data to a computer system,
- receiving said information data,
- measuring location of the reading device,
- providing location data to the computer system,
- checking information data and/or location data whether it matches with checkpoints formerly created in the computer system,
- when the data matches, confirming the presence of a person at the checkpoint,
- when the data does not match with the checkpoints formerly created in the system, creating a checkpoint in the system based on the received information and/or location data such that the checkpoint will be recognized by the system based on checkpoint identifier information data and/or location data received from a reading device.

In one embodiment of the invention the system notifies of information data and/or location data not matching with formerly created checkpoints of the system, optionally visually on the reading device user interface.

In another embodiment location data is provided to the computer system by user input, optionally by pressing a button or touchscreen, a set number of times, in order to initialize the creation of a new checkpoint in the system.

In a further embodiment a created checkpoint is automatically named in the system, optionally by location coordinate, information and/or address data.

In one embodiment the checkpoint identifier is at least one from the group of: RFID tag, NFC tag, QR code, barcode or a scene of the checkpoint.

In another embodiment the computer system comprises a number of servers hosting the presence monitoring system data service, and wherein at least one reading device is configured to communicate with the number of servers.

In one embodiment the location data is provided with a satellite positioning system, such as GPS (Global Positioning System) that is at least functionally connected to the reading device. The location information can be made more accurate by providing several measurements with satellite positioning system.

In another embodiment initial location data is provided at an intermediate destination with a satellite positioning system, such as GPS (Global Positioning System) that is at least functionally connected to the reading device, and location of the checkpoint is determined based on the initial location data and a distance between the initial destination and the checkpoint, wherein the distance is measured by tracking the route travelled by the reading device with tracking sensor(s) of the reading device. The intermediate destination may also serve as a checkpoint.

In a further embodiment a mobile reader device is configured to communicate with the hosting servers for allowing user access to the presence monitoring system data service for monitoring presence of a person.
In one embodiment the system notifies of lacking information data, optionally visually on the reading device user interface.

In another aspect of the present invention, a presence monitoring system for implementing the method comprises
- a number of device-readable checkpoint identifiers for providing checkpoints,
- at least one reading device for reading the checkpoint identifiers and transmitting checkpoint identifier related information data to a computer system,
- a positioning system functionally connected to the reading device for providing checkpoint identifier location data to the computer system,
- a computer system for receiving and storing checkpoint identifier information and location data, and creating a checkpoint in the system based on the information and location data, such that the checkpoint is recognized by the system based on checkpoint identifier information data and/or location data received from the reading device.

The utility of the present invention follows from a plurality of factors depending on each particular embodiment. Some embodiments of the system and method facilitate setting up presence monitoring systems. Some embodiments ease the transition of one presence monitoring system service provider to another. Some embodiments save resources, both manpower and goods, as existing installation of identifiers may be utilized. Some embodiments may further improve accuracy of checkpoint position measurement.

For example, it is possible to create checkpoints to a presence monitoring system by obtaining identifier data from existing tags or other kinds of identifiers, and use this identifier data for creating checkpoints in the system. So it is not necessary to preinstall the identifier data to the system, and it is thus not always necessary to install new identifiers such as tags. Positioning data from a reading device can be used for obtaining location information of a checkpoint into the system, and the location information can be made more accurate by obtaining the positioning data several times. There may be certain requirements for accepting a new checkpoint in the system, such as reading the identifier a determined number of times, or reading the identifier with an authorized reading device.

The term "person" refers herein primarily to a human being whose presence is monitored, but the "person" may also be a robot.

The term "presence monitoring may also mean time attendance or work flow management.

The term "checkpoint" means a place where presence monitoring is required.

The term "GPS" is used as a general term for any satellite based positioning system.

The expression "a number of" refers herein to any positive integer starting from one (1), e.g. to one, two, or three.

The expression "a plurality of" refers herein to any positive integer starting from two (2), e.g. to two, three, or four.

Various embodiments of the present invention are disclosed in the dependent claims.

### BRIEF DESCRIPTION OF THE RELATED DRAWINGS

Next the invention is described in more detail with reference to the appended drawings in which
Fig. 1 is a sketch of an embodiment of a system in accordance with the present invention.
Fig. 2 is a block diagram illustrating the internals of the hardware of an embodiment of the system.
Fig. 3 is a sketch illustrating an embodiment of a user interface view in accordance with the present invention.
Fig. 4 is a flow diagram of an embodiment of a method in accordance with the present invention.

### DETAILED DESCRIPTION OF THE EMBODIMENTS

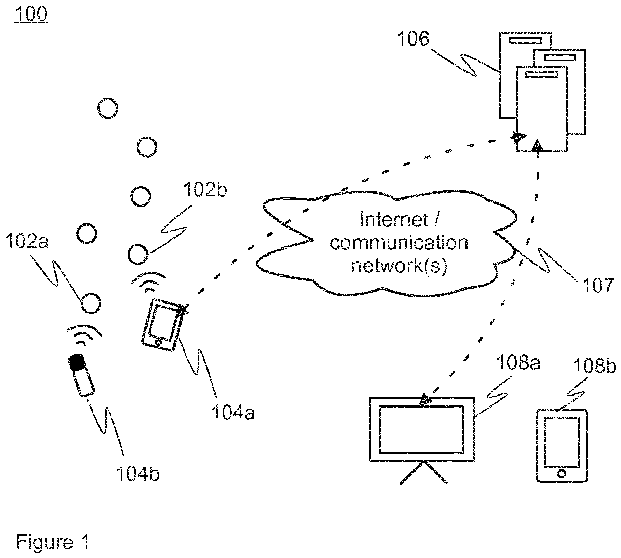

Figure 1 illustrates an exemplary presence monitoring system 100 in accordance with the present invention.

The system 100 comprises a number of checkpoint identifiers 102a, 102b. The checkpoint identifiers are arranged at different locations such as office buildings, warehouses and other spaces that may require presence monitoring. The checkpoint identifiers may be any type of identifier that comprises information that is identifiable with the checkpoint in question such as RFID tag, NFC tag, QR code or bar code, for example. The identifier may also be something unique at the location, such as a painting, or the view of the location as such. The identifier may also be related to the location data of the checkpoint so that it is not necessary to have any physical identifier means at the checkpoint. Further, it is possible that there is more than one type of identifiers for a certain checkpoint. It is also possible that checkpoints of the system have different types of identifiers, so that the identifiers of all checkpoints are not the same type.

There are different kinds of advantages related to different types of identifiers. A wireless electronic identifier, such as RFID or NFC, is difficult to copy and it is thus relatively safe. A printed, visual identifier like barcode or QR code is easy to produce even at the installation site. A unique visual scene may be readily available, and no installation is therefore needed. Using measured location as an identifier does not either require installation of the identifier, but it is possibly not accurate enough for separating closely situated checkpoints such as rooms of a building. However, the actual location information of the checkpoint can be made more accurate by using results of several location measurements by e.g. averaging.

The system 100 comprises a number of mobile reading devices 104a, 104b. The reading device 104a, 104b utilized in the system is for example a smartphone, a tablet or a dedicated reading device with functionalities to read the checkpoint identifiers. Depending on the system embodiment a reader may be equipped with functionalities to read RFID tags, NFC tags, QR codes and/or bar codes. Reading a checkpoint identifier may also be taking a photo at the location, or recording a sound. The reading device 104a, 104b also comprises transmitting means to transmit the information data from the checkpoint identifiers to a computer system 106, such as a server entity. The reading device transmits the information data over a communication network 107 such as a mobile cellular communications network and the Internet, for example.

A positioning system, such as a GPS system, is at least functionally connected to the reading device 104a, 104b for providing location data. The positioning system may be integrated to the reading device, or optionally connected as a separate device entity. The positioning system may be utilized to provide checkpoint identifier location data. The reading device may read the information data from a checkpoint identifier and transmit the information data together with location data to the computer system 106. The computer system may receive the location and information data and create a checkpoint based on the location and information data.

The presence monitoring system 100 may also comprise a number of terminal devices 108a, 108b such as desktop computers, laptop computers, tablets, smartphones or the like, to access the presence monitoring system data. The terminal devices are connected to the computer system 106 over the communication network 107, such as the Internet.

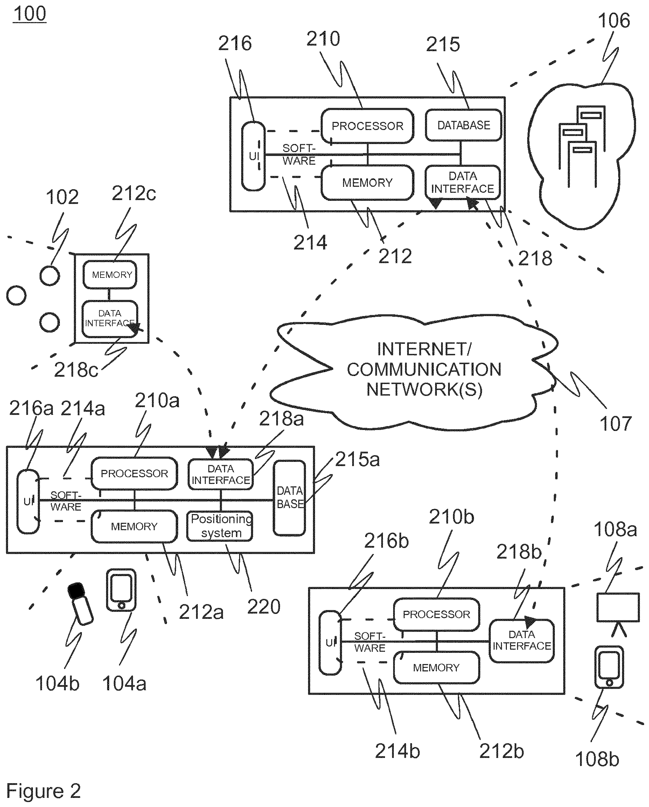

Figure 2 is a block diagram of the related hardware of the presence monitoring system 100.

The presence monitoring system may comprise a computer system 106. The computer system may comprise one or more servers that may additionally locate in a cloud environment, for example. The servers may be configured to host the presence monitoring system data service.

A server or similar computing entity may comprise a number of processing elements, i.e. processors 210 such as microprocessors, microcontrollers, DSPs (digital signal processor), programmable logic chips, etc.. The processors 210 may execute instructions and process data stored in a number of memory elements 212 such as memory chips. The instructions for hosting the data service such as receiving location data, information data and/or creating checkpoints may be executed in accordance with computer software 214. Computer software may be sent over the communication network over a wireless or wired medium or it may be transported using a physical carrier medium such as a memory card/stick or optical disc, for example. The server may also comprise or connect with a database 215 storing information, location and/or identification data and/or storing other relevant data needed for implementing the presence monitoring system.

The computer system 106 may also comprise a user interface (UI) 216. The UI may be a local and/or a remote UI for controlling the computer system and/or the executed software. UIs may comprise displays for data output, and keyboards, mice and/or touch surfaces for user input, for example. The computer system also comprises a data transfer interface, such as Ethernet or other LAN (Local Area Network) for connection to external communication network(s) 107, including the Internet, so that communication with the reading devices 104a, 104b and/or terminal devices 108a, 108b are enabled.

The presence monitoring system data service hosted by the computing system 106 may comprise a user interface accessible with a terminal device 108a and/or reading device 104a. The user interface may comprise a browser-based UI and/or a dedicated application (e.g. mobile app) for allowing data access to a user, for example.

The reading devices 104a, 104b may comprise corresponding elements such as processor elements 210a, memory elements 212a and computer software 216a. The reading device also comprises a user interface which may be a touchscreen such as one in a smartphone or tablet device. A dedicated reading device may only comprise buttons or similar user input means as the UI. In some embodiments however, the dedicated reading device may also comprise a visual display, for example. The reading device also comprises a number of data transfer interfaces 218a for allowing communication with the computer system 106 over the communication network 107 such as the internet. The data transfer interfaces may include wireless means such as cellular (e.g. 3G or 4G) or WLAN (Wireless Local Area Network). The data transfer interface 218a also includes means for allowing data transfer with the checkpoint identifiers 102. A positioning system 220 such as the GPS system is also functionally connected to the reading device for providing location data.

It is possible that the reading device also has a database for storing information, location and/or identification data and/or storing other relevant data. Such a database makes it possible to use the reader device offline, without connection to the server of the system. The local database of the reading device can then be synchronized with the server database when online communication is available.

The data from the checkpoint identifiers 102 may be collected with the AIDC (Automatic identification and data capture) method such that the checkpoint identifier is automatically identified and data is automatically collected and transmitted to the computer system 106. This may include collecting data from RFID tags, NFC tags, QR-codes barcodes and/or photos, for example. The checkpoint identifier 102 may comprise a memory element 212c which stores a unique identification code or information data that is identifiable with the checkpoint identifier 102. The checkpoint identifier may also comprise a data transfer interface for allowing data transfer with the reading device. In some embodiments the checkpoint identifier may even comprise software and/or processing elements.

The terminal device 108a, 108b for accessing the service provided by the computer system 106 may as well include processing elements 210b, memory elements 212b and at least one data transfer interface 218b such as a wireless cellular or WLAN and/or wired network (e.g. Ethernet or other LAN). The terminal device may also include software 214b for connecting to the remote computing system 106 and a UI 314 such as a touchscreen (e.g. smartphone or tablet device) or display and keyboard (e.g. laptop or desktop computer).

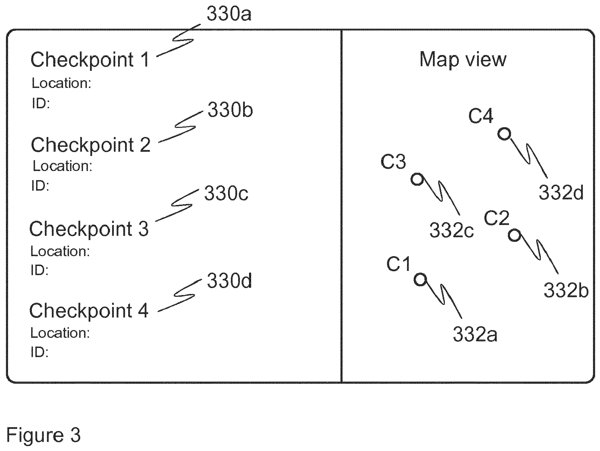

Figure 3 illustrates a conceptual view of a user interface for the data service provided by the computer system and accessed on the terminal and/or reading device. The UI view may comprise a number of listed destinations 330a-d representing the physical location of a checkpoint identifier. The checkpoints 330a-d comprises location data such as GPS coordinates and information data from a checkpoint identifier such as RFID, NFC, QR code, barcode or photo information data. As the computer system receives location and information data for a checkpoint identifier, it may create a checkpoint and automatically name the checkpoint based on the received information and location data. The system may also utilize other accessible data, optionally over the Internet, to provide a title such as the address of the checkpoint and/or the name of the building, for example. The UI may also comprise a map view with the checkpoints 332a-332d located on a map for visual representation of the physical locations. The system may utilize external map services such as Google Maps™ for mapping the checkpoints, for example.

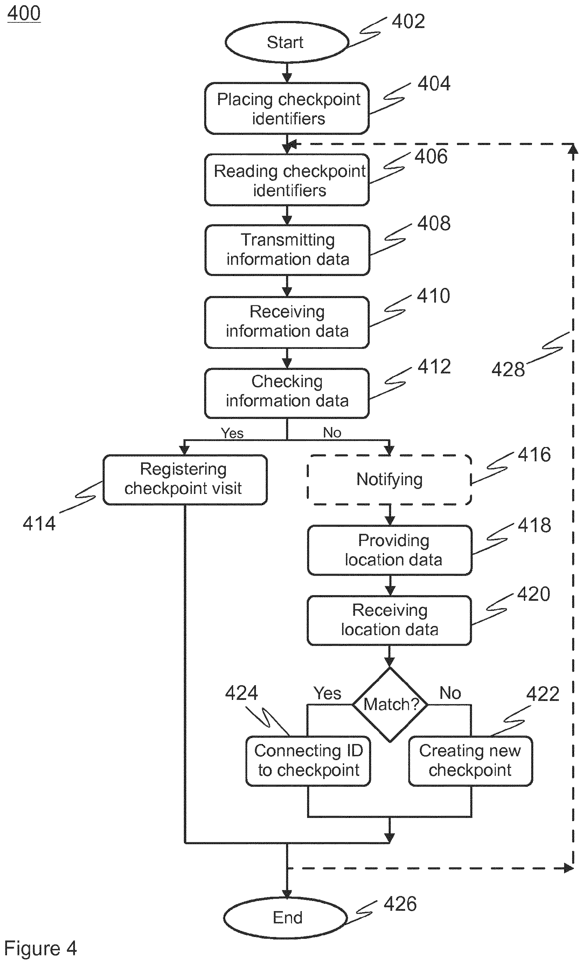

Figure 4 is a flow diagram of an embodiment of a method in accordance with the present invention.

At start-up 402 of the method, preparatory actions may take place.

At 404, checkpoint identifiers are determined on different locations. This step may comprise reading identifiers which have been installed previously, or it may comprise determining some unique item, such as a painting at the checkpoint, as an identifier. The step may also comprise mounting checkpoint identifiers such as RFID tags to walls, doors and/or other physical locations, for example.

At 406, the checkpoint identifiers are read with a reading device. This step may include bringing a reading device to close proximity to the checkpoint identifier so that the device detects the checkpoint identifier. This step may also comprise taking a picture or determining GPS location.

At 408, information data is received from the checkpoint identifier to the reading device. The identifier data may be combined with time and location data, and transmitted further to a computer system hosting the presence monitoring system data service.

At 410, the computer system, preferably one or more servers, receives the information data.

At 412, the computer system checks if the information data is stored in the system. This step may include connecting to a database and comparing data stored in the database.. It is possible that the system checks that the identification data is related to an existing checkpoint and that the measured location is within a determined range of the actual checkpoint location stored in the system. If matching information data is found in the system, the method continues at step 414. If there is no matching information data, then the method continues at step 416.

At 414, checkpoint presence is registered. The system identifies the information data from the checkpoint identifier and registers a visit at the checkpoint. The registration may include a time stamp and/or user data such as information on the person or mobile terminal at the checkpoint. It is also possible that the location data of the checkpoint stored in the system is made more accurate based on the received new location measurement result.

At 416, the system notifies of lacking information data. This step may include (visual) notification to the reading device such that a user is notified with text that the information data does not exist in the system. The system may inquire if the user wants to create a checkpoint of the particular identifier. Alternatively, this step may take place within the data system such that the user is not notified separately.

At 418, location data is provided to the computer system. For example, a user may send location data to the computer system by pressing a touchscreen/button or other input means. In some embodiments the location data may be sent and/or a button may be pressed a certain amount of times, for example 2, 3 or 5 times for creating a checkpoint at the location. Alternatively, in some embodiments location data may be sent automatically after the system has noticed that there is no matching information data stored in the system (step 412). The location data is preferably based on satellite positioning signals received and processed by the mobile reader. Location data can be used for confirmation of the person's presence at the right checkpoint, but it can also be used as the only identifier of a checkpoint. Especially, it can be used for creating a new checkpoint in the system.

At 420, the computer system receives location data from the reading device. If no matching location data is found in the system, then the method continues at 422. If matching location data is found in the system, then the method continues at 424.

The location measurement typically gives a result that the checkpoint location is within a circle where the radius depends on the measurement accuracy. It is then possible that the measured circles of two or more checkpoints overlap. In such situation it may not be possible to confirm with the location data, which of the checkpoints is stamped by the person. According to one embodiment of the invention, this problem is solved by using several location measurements of each checkpoint and using the measurement results for improving the accuracy of the location information of the checkpoints. This way the inaccuracy circles can be reduced in size, and possibly their overlapping avoided or reduced.

Satellite positioning systems often do not function indoors. It is also possible that checkpoints are so close to each other that it is not possible to differentiate the positions with a satellite positioning system. This problem can be solved with an embodiment of the invention. A checkpoint is created in a location where satellite positioning functions, such as at an entrance of a building. After a person has stamped the presence at the intermediate checkpoint, the reading starts tracking its movement with sensors, such as a gyroscope, accelerometer, compass and gravitation measurement. The location of the following checkpoint(s) is then determined based on the initial location data and the distance between the initial destination and the checkpoint, wherein the distance is measured by tracking the route travelled by the reading device. This way it is possible to accurately determine location of checkpoints in places where satellite positioning does not function, such as indoors a building, or in situations where checkpoints are so close to each other that the locations cannot be differentiated with satellite positioning.

Next it is checked whether the received location data matches with a checkpoint registered in the system. If there is a match the system connects the received data to the existing checkpoint at step 424. Thereby, a checkpoint may be completed with the received information data which is then linked to the location data already stored in the system.

If there is not a match, the computer system creates at step 4222 a new checkpoint based on the received information and/or location data. This step may include linking the information data with the location data and storing the data as a checkpoint in the database, for example. The step may also include naming the checkpoint by coordinates, address (street, street number, postal code, etc..), building name or other information indicating the physical location of the checkpoint.

At 426, the method execution is ended. The method may vary from the presented above depending on each embodiment. The dotted arrow line 428 represents the continuity of the presented method. The checkpoint identifiers may be placed on a route by the same service provider or some other service provider. After checkpoint identifiers have been determined in physical locations, they may be read and information data may be transmitted to a computer system as presented in the method example.

After the system has created a checkpoint at step 422, a user may go on to read another checkpoint identifier or the same checkpoint identifier, as indicated by the dotted arrow line 428. If matching information data is noticed by the system, the system may register a checkpoint visit. If there is no matching information data, the system may go on to connect to or create a checkpoint as presented above. In some embodiments, the system may register a checkpoint visit based on matching location data provided by a reading device.

The presence monitoring system may be used in various fields of operation such as monitoring the presence of a field work person, for example.

Consequently, a skilled person may on the basis of this disclosure and general knowledge apply the provided teachings in order to implement the scope of the present invention as defined by the appended claims in each particular use case with necessary modifications, deletions, and additions.

## Claims

1. Method for setting up a presence monitoring system and/or for monitoring presence of a person, comprising the steps of
- determining checkpoints,
- determining device-readable checkpoint identifiers at the determined checkpoints,
- reading a checkpoint identifier with a reading device,
- transmitting checkpoint identifier related information data to a computer system,
- receiving said information data,
- measuring location of the reading device,
- providing location data to the computer system,
- checking information data and/or location data whether it matches with checkpoints formerly created in the computer system,
- when the data matches, confirming the presence of a person at the checkpoint,
- when the data does not match with the checkpoints formerly created in the system, creating a checkpoint in the system based on the received information and/or location data such that the checkpoint will be recognized by the system based on checkpoint identifier information data and/or location data received from a reading device.

2. The method of claim 1, wherein the system notifies of information data and/or location data not matching with formerly created checkpoints of the system, optionally visually on the reading device user interface.

3. The method of any preceding claim, wherein location data is provided to the computer system by user input, optionally by pressing a button or touchscreen, a set number of times, in order to initialize the creation of a new checkpoint in the system.

4. The method of any preceding claim, wherein a created checkpoint is automatically named in the system, optionally by location coordinate, information and/or address data.

5. The method of any preceding claim, wherein the checkpoint identifiers is at least one from the group of: RFID tag, NFC tag, QR code, barcode or a scene of the checkpoint.

6. The method of any preceding claim, wherein the computer system comprises a number of servers hosting the presence monitoring system data service, and wherein at least one reading device is configured to communicate with the number of servers, and wherein the server and/or reading device has a database for storing data of the checkpoints.

7. The method of any preceding claim, wherein the location data is provided with a satellite positioning system, such as GPS (Global Positioning System), that is at least functionally connected to the reading device, and optionally the location information is made more accurate by providing several measurements with satellite positioning system.

8. The method of any preceding claim, wherein initial location data is provided at an intermediate destination with a satellite positioning system, such as GPS (Global Positioning System) that is at least functionally connected to the reading device, and location of the checkpoint is determined based on the initial location data and a distance between the initial destination and the checkpoint, wherein the distance is measured by tracking the route travelled by the reading device by tracking sensor(s) of the reading device.

9. The method of any preceding claim, wherein a terminal device is configured to communicate with the hosting servers for allowing user access to the presence monitoring system data service for monitoring presence of a person.

10. A presence monitoring system for implementing the method of any of the claims 1-9, the system comprising
- a number of device-readable checkpoint identifiers for providing checkpoints,
- at least one reading device for reading the checkpoint identifiers and transmitting checkpoint identifier related information data to a computer system,
- a positioning system functionally connected to the reading device for providing checkpoint identifier location data to the computer system,
- a computer system for receiving and storing checkpoint identifier information and location data, and creating a checkpoint in the system based on the information and/or location data, such that the checkpoint is recognized by the system based on checkpoint identifier information data and/or location data received from the reading device.
